# FASCICULE DE BREVET EUROPEEN

(11) **EP 1 323 572 B1**
(45) Date de publication et mention de la délivrance du brevet: **08.08.2007**
(21) Numéro de dépôt: 02293194.3
(22) Date de dépôt: 20.12.2002
(51) Int. Cl.: B60L 11/18

(54) **Procédé de gestion de la montée en puissance disponible d'une pile à combustible**
Verfahren zur Regelung des Hochfahrens der verfügbaren Energie einer Brennstoffzelle
Managing method for ramp-up the disponible power of a fuel cell

(30) Priorité: 20.12.2001 FR 0116563
(43) Date de publication de la demande: 02.07.2003
(73) Titulaire: RENAULT s.a.s., 92100 Boulogne Billancourt (FR)
(72) Inventeur: Keretli, Fahri, 78320 Le Mesnil St-Denis (FR); Marchand, Marielle, 91440 Bures s/Yvette (FR)

(56) Documents cités:
- EP-A- 0 664 571
- EP-A- 0 999 078
- WO-A-00/54355
- WO-A-01/95419
- DE-A- 19 948 215
- US-B1- 6 186 254
- BOSE B K ET AL: "Power and energy storage devices for next generation hybrid electric vehicle" ENERGY CONVERSION ENGINEERING CONFERENCE, 1996. IECEC 96., PROCEEDINGS OF THE 31ST INTERSOCIETY WASHINGTON, DC, USA 11-16 AUG. 1996, NEW YORK, NY, USA,IEEE, US, 11 août 1996 (1996-08-11), pages 1893-1898, XP010198025 ISBN: 0-7803-3547-3

## Description

La présente invention est relative à un procédé de gestion de la montée en puissance disponible d'une pile à combustible insérée dans un circuit d'alimentation en énergie électrique d'au moins un consommateur d'un véhicule automobile, notamment d'un moteur électrique de propulsion dudit véhicule, ladite pile à combustible comportant au moins deux éléments de pile branchés en parallèle et aptes à être connectés sélectivement audit circuit.

Une pile à combustible montée dans un véhicule automobile est destinée à la production d'énergie électrique, notamment pour alimenter le moteur électrique de propulsion du véhicule. L'énergie électrique qu'elle produit résulte d'une réaction chimique consommant de l'hydrogène. Selon les technologies, l'hydrogène est stockée à bord du véhicule ou au contraire fabriquée par un reformeur à partir d'un carburant comme de l'essence ou du méthanol.

Généralement, une pile à combustible est constituée d'un ensemble de cellules connectées en série et suffisamment nombreuses pour pouvoir fournir une tension électrique adaptée aux consommateurs électriques du véhicule. Parfois plusieurs ensembles de cellules, appelés « éléments de pile », sont montés en parallèle pour augmenter la puissance que peut délivrer la pile.

On appelle « puissance disponible » la puissance que peut potentiellement délivrer la pile à combustible, c'est-à-dire la puissance qu'elle serait capable de fournir à un consommateur qui y serait connecté.

De préférence, la température d'une pile à combustible doit appartenir à une plage de températures déterminée pour rendre optimal son fonctionnement et lui permettre de délivrer une puissance dite « nominale », c'est-à-dire la puissance pour laquelle elle a été prévue. Quand sa température n'appartient pas à cette plage, une pile à combustible ne peut fournir sa puissance nominale et présente un rendement énergétique médiocre.

Dans le cas des piles à membrane échangeuse d'ions, dites PEM, de l'anglais « proton exchange membrane », la plage de températures de fonctionnement optimal est sensiblement centrée sur une température de 80°C.

Au démarrage du véhicule, la pile à combustible est à température ambiante et il est donc nécessaire d'augmenter sa température.

Quand le fonctionnement de la pile à combustible est exothermique, il est connu de récupérer l'énergie calorifique qu'elle dégage pour faire monter sa température. Mais tant que cette température est trop basse, les performances énergétiques de la pile à combustible sont médiocres.

Par ailleurs, des recherches en cours pourraient aboutir à la fabrication de piles à combustible fonctionnant à des températures encore plus élevées, ce qui accentuerait encore le problème des performances énergétique au démarrage.

Le document WO 0195419 présente un procédé comme décrit au préambule de la revendication 1.

Le but de la présente invention est de fournir un procédé de gestion de la montée en puissance disponible d'une pile à combustible, notamment lors du démarrage à froid du véhicule, tel que cette montée en puissance ne s'accompagne pas d'une dégradation des performances énergétiques de la pile à combustible.

On atteint ce but au moyen d'un procédé de gestion de la montée en puissance disponible d'une pile à combustible insérée dans un circuit d'alimentation en énergie électrique d'au moins un consommateur d'un véhicule automobile, notamment d'un moteur électrique de propulsion dudit véhicule, ladite pile à combustible comportant au moins deux éléments de pile branchés en parallèle et aptes à être connectés sélectivement audit circuit d'alimentation électrique.

Ce procédé est remarquable en ce que on procède selon les étapes dans la partie caractérisante de la revendication 1.

Seuls les éléments de pile ayant été préalablement ajustés en température, et donc présentant un rendement énergétique satisfaisant, sont connectés au circuit d'alimentation électrique. Une fois connectés électriquement, les éléments de pile, exothermiques, ne requièrent plus de puissance calorifique.

La montée en puissance de la pile à combustible s'effectue donc sans qu'aucun des éléments de pile connectés n'ait à fonctionner en dehors de sa plage de températures de fonctionnement optimal.

Pendant toute la montée en puissance, les performances énergétiques de la pile à combustible restent donc satisfaisantes.

Selon d'autres caractéristiques de ce procédé,
- on utilise de l'énergie calorifique dégagée par au moins un desdits éléments de pile connectés pour chauffer, pendant l'étape a), ledit élément de pile déconnecté ;
- quand l'énergie électrique délivrée par lesdits éléments de pile connectés audit circuit d'alimentation électrique est inférieure à la demande d'énergie électrique dudit consommateur, on connecte des moyens de stockage d'énergie électrique audit circuit d'alimentation électrique ;
- quand l'énergie électrique délivrée par lesdits éléments de pile connectés audit circuit d'alimentation électrique est inférieure à la demande d'énergie électrique dudit consommateur, on met en sous tension des cellules d'au moins un desdits éléments de pile connectés ;
- on utilise l'énergie calorifique dégagée par une source calorifique auxiliaire pour ajuster ladite température pendant l'étape a);
- ladite source calorifique comporte des gaz chauds générés par un brûleur de chauffage d'un reformeur ;
- préalablement audit ajustement de la température et à ladite connexion électrique de chacun desdits éléments de pile de ladite pluralité, on connecte électriquement audit circuit d'alimentation électrique un premier élément de pile, puis on amène dans une plage de températures de fonctionnement optimal la température dudit premier élément de pile au moyen d'énergie calorifique dégagée par ledit premier élément de pile ;
- on fait fonctionner les cellules dudit premier élément de pile en sous tension au moins jusqu'à ce que la température dudit premier élément appartienne à sa plage de fonctionnement optimal ;
- on maintient en sous-tension au moins un desdits éléments de pile connectés. De préférence, ce maintien en sous-tension dure tant que tous les éléments de la pile n'ont pas atteint leur plage de température de fonctionnement optimal.

L'invention concerne également un dispositif de montée en puissance disponible d'une pile à combustible insérée dans un circuit d'alimentation en énergie électrique d'au moins un consommateur d'un véhicule automobile, tel qu'on le décrit à la revendication 8.

Ce dispositif est remarquable en ce que ledit circuit thermique comporte des moyens de mise en relation d'échange thermique sélective d'une source calorifique avec au moins un desdits éléments de pile, et ledit circuit d'alimentation électrique comporte des moyens de connexion électrique sélective dudit élément de pile audit circuit d'alimentation électrique.

Selon d'autres caractéristiques du dispositif selon l'invention,
- lesdits éléments de pile sont insérés dans des branches parallèles dudit circuit d'alimentation électrique ;
- lesdits moyens de connexion électrique sélective comportent des interrupteurs insérés dans chacune desdites branches parallèles ;
- ledit circuit d'alimentation comporte au moins une batterie insérée dans une branche parallèle auxdites branches et des moyens de connexion sélective de ladite batterie audit circuit d'alimentation électrique, ce qui permet avantageusement de stocker de l'énergie pour en disposer quand les seuls éléments de pile connectés ne suffisent pas à la demande en énergie électrique des consommateurs;
- ladite source calorifique est une source calorifique auxiliaire ;
- ladite source calorifique est un desdits éléments de pile, ce qui permet avantageusement d'améliorer le rendement énergétique de l'opération de chauffage de la pile à combustible ;
- ladite source calorifique comporte des gaz chauds générés par un brûleur de chauffage d'un reformeur ;
- ledit circuit de chauffage comporte des branches d'entrée et de sortie ayant une première extrémité commune, le fluide caloporteur entrant par la deuxième extrémité de ladite branche d'entrée et sortant par la deuxième extrémité de ladite branche de sortie, une pluralité d'échangeurs thermiques associés chacun à au moins un dit élément de pile étant insérés en série dans ladite branche d'entrée, au moins un desdits échangeurs comportant des moyens de court-circuiter lesdits échangeurs insérés en son aval de manière que le fluide caloporteur sortant dudit échangeur retourne, au moins en partie, directement dans ladite branche de sortie ;
- lesdits moyens de court-circuiter lesdits échangeurs insérés en aval d'un échangeur comportent une branche de court-circuit connectée d'une part à ladite branche d'entrée immédiatement en aval dudit échangeur et d'autre part à ladite branche de sortie, deux vannes étant insérées respectivement dans ladite branche de court-circuit et dans ladite branche d'entrée, immédiatement en aval du point de connexion de ladite branche de court-circuit.

L'invention concerne enfin une pile à combustible insérée dans un circuit d'alimentation en énergie électrique d'au moins un consommateur d'un véhicule automobile, notamment un moteur électrique de propulsion dudit véhicule, ladite pile à combustible comportant une pluralité d'éléments de pile et étant équipée d'un dispositif destiné à améliorer son rendement énergétique pendant sa montée en puissance disponible, ledit dispositif comportant un circuit de chauffage desdits éléments de pile et un calculateur de commande desdits circuits d'alimentation électrique et de chauffage. La pile à combustible selon l'invention est remarquable en ce que ledit dispositif est conforme à l'invention.

D'autres caractéristiques et avantages de la présente invention apparaîtront à la lecture de la description qui va suivre et au travers du dessin annexé dans lequel la figure unique représente schématiquement un dispositif selon l'invention, dans le mode de réalisation préféré de l'invention.

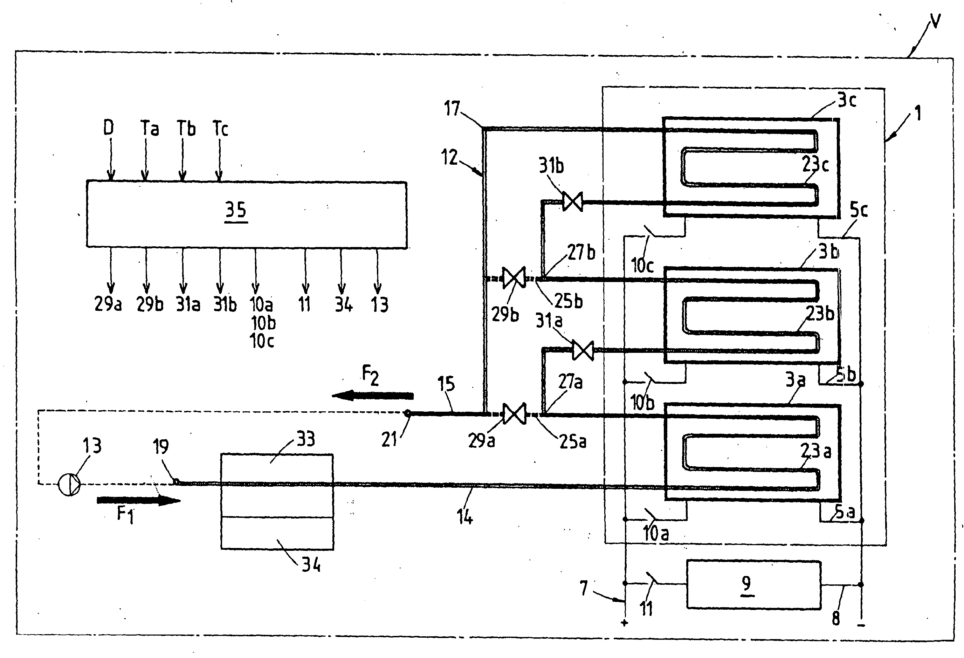

La pile à combustible 1 représentée sur la figure 1 comporte des premier, deuxième et troisième éléments de pile 3a, 3b et 3c insérés dans des branches parallèles 5a, 5b et 5c, respectivement, d'un circuit d'alimentation électrique 7.

Les éléments de pile 3a, 3b et 3c ont des plages de températures de fonctionnement optimale désignées par Pₐ, P_{b} et P_{c}, respectivement.

Le circuit d'alimentation électrique 7, ou « circuit électrique » 7, comporte en outre une branche 8, parallèle aux branches 5a, 5b et 5c, dans laquelle est insérée une batterie 9.

Des interrupteurs 10a, 10b et 10c sont insérés dans les branches 5a, 5b et 5c, respectivement. Ces interrupteurs constituent des moyens de connexion électrique sélective des éléments de pile 3a, 3b et 3c, respectivement, au circuit d'alimentation électrique 7.

Un interrupteur 11 est également inséré dans la branche 8 dans laquelle est insérée la batterie 9.

Le circuit d'alimentation électrique 7 est destiné à l'alimentation électrique de consommateurs électriques, non représentés, d'un véhicule V, par exemple à l'alimentation d'un moteur électrique de propulsion. Les consommateurs sont branchés aux bornes + et - du circuit d'alimentation électrique 7.

Le dispositif selon l'invention comporte un circuit de chauffage 12 dans lequel circule un fluide caloporteur mis en circulation par une pompe 13.

Le circuit 12 comporte des branches d'entrée et de sortie, 14 et 15 respectivement, connectées entre elles par une première extrémité commune 17, le fluide caloporteur entrant par la deuxième extrémité 19 de ladite branche d'entrée 14 (flèche F1) et sortant par la deuxième extrémité 21 de ladite branche de sortie 15 (flèche F2).

Des échangeurs thermiques 23a, 23b et 23c, associés aux éléments de pile 3a, 3b et 3c, respectivement, sont insérés en série dans la branche d'entrée 14.

Un échangeur est dit « associé » à un élément de pile si une relation d'échange thermique peut être établie entre cet élément de pile et le fluide caloporteur traversant cet échangeur.

Chacun des échangeurs 23a et 23b comporte des moyens de court-circuiter le ou les échangeurs insérés en son aval. Le fluide caloporteur sortant de l'échangeur 23a, respectivement 23b, peut ainsi retourner directement dans la branche de sortie 15, sans traverser les échangeurs 23b et 23c, respectivement l'échangeur 23c.

Les moyens de court-circuiter le ou les échangeurs insérés en aval des échangeurs 23a et 23b comportent des branches de court-circuit 25a et 25b, représentées en traits interrompus, connectées d'une part à la branche d'entrée 14 immédiatement en aval des échangeurs 23a et 23b, respectivement, en des points de connexion 27a et 27b, respectivement, et d'autre part à la branche de sortie 15.

Deux vannes 29a et 29b sont insérées dans les branches de court-circuit 25a et 25b, respectivement.

Deux vannes 31a et 31b sont également insérées dans la branche d'entrée 14, immédiatement en aval des points de connexion 27a et 27b, respectivement, des branches de court-circuit 25a et 25b, respectivement.

Un échangeur thermique auxiliaire 33, en relation d'échange thermique avec une source calorifique auxiliaire 34, par exemple des résistances électriques, est inséré dans la branche d'entrée 14, en amont de l'échangeur 23a.

Le dispositif représenté sur la figure 1 comporte enfin un calculateur 35 au moins informé de la demande en énergie électrique D des consommateurs électriques, des températures Ta, Tb et Tc des éléments de pile 3a, 3b et 3c, respectivement, et commandant la position des vannes 29a, 29b, 31a et 31b, la position des interrupteurs 10a, 10b, 10c et 11, ainsi que la mise en marche ou à l'arrêt de la source calorifique 34 et de la pompe 13.

Le fonctionnement du dispositif représenté sur la figure 1 est le suivant. Au démarrage, les interrupteurs 10a, 10b, 10c et 11 sont ouverts.

Le calculateur 35 commande la libération d'énergie calorifique par la source calorifique 34, l'ouverture de la vanne 29a, la fermeture des vannes 29b et 31a, et la mise en marche de la pompe 13. En traversant l'échangeur thermique auxiliaire 33, le fluide caloporteur reçoit de l'énergie calorifique qu'il transfère, au moins en partie, à l'élément de pile 3a lors de sa traversée de l'échangeur 23a. Après avoir traversé l'échangeur 23a, le fluide caloporteur rejoint la branche de sortie 15 par la branche de dérivation 25a. Les échangeurs 23b et 23c sont donc « inactivés », c'est-à-dire que fluide caloporteur ne circule pas à travers eux.

Le reformeur peut servir de source calorifique 34, dans la mesure où sa température de fonctionnement, de l'ordre de 800°C, est supérieure à celle de la pile à combustible 1. Avantageusement, on valoriserait l'énergie calorifique dégagée par le reformeur, autrement perdue.

Au démarrage du véhicule V, le reformeur doit lui-même être chauffé, par exemple au moyen d'un brûleur. Dans cette situation, il est particulièrement avantageux d'utiliser comme source calorifique en relation d'échange thermique avec l'échangeur 33 les gaz chauds générés par le brûleur et ayant servi à chauffer le reformeur, cette énergie calorifique étant sinon évacuée vers l'extérieur du véhicule V. On évite ainsi le recours à une source calorifique spécifique à la pile à combustible 1.

L'énergie calorifique fournie par la source calorifique auxiliaire 34 n'est destinée qu'au seul élément de pile 3a, ce qui permet avantageusement une montée rapide de la température de ce dernier. Le temps de réponse au démarrage de la pile à combustible à une variation de la demande en énergie électrique en est améliorée.

Quand la température de l'élément de pile 3a atteint la limite inférieure de la plage Pₐ, l'interrupteur 10a est fermé de manière que l'élément de pile 3a fournisse de l'énergie électrique aux consommateurs électriques du véhicule V.

La fourniture d'énergie électrique par l'élément de pile 3a s'accompagne d'un dégagement de chaleur suffisant pour maintenir sensiblement constante la température de l'élément de pile 3a, voire pour l'élever.

Pour éviter que la température de l'élément de pile 3a ne dépasse la température limite maximale de la plage Pₐ, il est donc nécessaire de cesser l'apport d'énergie calorifique, voire d'apporter de l'énergie frigorifique.

Le calculateur 35 commande donc l'inactivation de l'échangeur 33. L'inactivation peut résulter par exemple d'un contournement de l'échangeur 33 par le fluide caloporteur par exemple au moyen d'une branche de dérivation, non représentée.

De préférence, si le fonctionnement de la source calorifique 34 n'est plus nécessaire par ailleurs, le calculateur 35 commande son arrêt. Le calculateur 35 commande également la fermeture de la vanne 29a et de la vanne 31b et l'ouverture des vannes 31a et 29b de manière que le fluide caloporteur traverse successivement l'échangeur 23a en recevant de l'énergie calorifique, puis l'échangeur 23b en cédant, au moins en partie, cette énergie calorifique à l'élément de pile 3b.

Avantageusement, les pertes calorifiques de l'élément de pile 3a sont donc utilisées pour chauffer l'élément de pile 3b.

Quand la température de l'élément de pile 3b atteint la limite inférieure de la plage P_{b}, l'interrupteur 10b est fermé de manière que l'élément de pile 3b fournisse de la puissance électrique aux consommateurs électriques du véhicule V.

La montée en température de l'élément de pile 3c puis sa connexion au circuit d'alimentation électrique 7 s'effectuent ensuite comme celles de l'élément de pile 3b. La vanne 31b est ouverte, la vanne 29b fermée, et l'énergie calorifique dégagée par les éléments de pile 3a et 3b en partie restituée à l'élément de pile 3c. Quand la température de ce dernier entre dans la plage de températures de fonctionnement optimal P_{c}, l'interrupteur 10c se ferme et l'élément de pile 3c fournit à son tour de la puissance électrique aux consommateurs électriques du véhicule V.

Après connexion des trois éléments de pile 3a, 3b et 3c, le circuit thermique 12 peut être utilisé pour évacuer vers l'extérieur du véhicule V, par exemple par l'intermédiaire d'un radiateur non représenté, l'énergie calorifique dégagée par ces éléments de pile.

L'utilisation, pour chauffer la pile à combustible 1, d'une source calorifique 34 différente de la pile à combustible 1 elle-même est connue, par exemple par le brevet WO 01 03 216. Avantageusement, selon l'invention, la source calorifique 34 n'est utilisée que pour le chauffage du seul élément de pile 3a, ce qui permet de limiter l'énergie fournie par la source calorifique 34 pour chauffer la pile à combustible 1.

Le calculateur 35 contrôle à tout instant la demande en énergie électrique des consommateurs du véhicule V. Quand l'énergie électrique délivrée par les éléments de pile connectés au circuit d'alimentation électrique 7 est inférieure à cette demande et qu'aucun élément de pile supplémentaire ne peut être connecté audit circuit d'alimentation électrique, le calculateur 35 commande la fermeture de l'interrupteur 11. La batterie 9 fournit alors une énergie électrique complémentaire.

Avantageusement, un élément de pile n'est connecté au circuit d'alimentation électrique que si sa température appartient à sa plage de températures de fonctionnement optimal.

Dans le cas où la batterie 9 et les éléments de pile à température optimale ne suffisent pas à fournir l'énergie électrique demandée par les consommateurs, un élément de pile dont la température n'appartient à sa plage de températures de fonctionnement optimal peut être connecté au circuit d'alimentation électrique 7. Mais le rendement de la pile à combustible 1 s'en trouvera dégradé.

La batterie 9 est rechargée quand les besoins des consommateurs sont inférieurs à la production d'énergie électrique par le pile à combustible 1.

Les cellules constituant les éléments de pile 3a, 3b et 3c sont conçues pour fonctionner à une tension nominale, typiquement de l'ordre de 0,7 V. Cependant, en faisant fonctionner ces cellules à une tension inférieure, par exemple de 0,6 V, la puissance électrique que peuvent fournir ces cellules augmente.

Ainsi, à température optimale, un seul élément de pile dont les cellules fonctionnent en sous tension à 0,6 V génère-t-il environ 40 à 50% de la puissance maximale générée par trois éléments de pile identiques branchés en parallèle et dont les cellules fonctionnent à tension nominale de 0,7 V.

Avec deux éléments de pile fonctionnant en sous tension à 0,6 V, à température optimale, il est ainsi possible de fournir la même puissance électrique maximale que trois éléments de pile identiques branchés en parallèle et dont les cellules fonctionnent à tension nominale de 0,7 V.

Avantageusement, pour réduire le recours à la batterie 9, il est donc possible de mettre les cellules d'un ou plusieurs éléments de pile en sous tension, par exemple à 0,6 V.

Le fonctionnement en sous tension de cellules entraîne un dégagement important d'énergie calorifique, difficile à évacuer. De préférence, il n'est mis en oeuvre que si la demande en énergie électrique des consommateurs dépasse la quantité maximale d'énergie électrique pouvant être fournie par les éléments de pile connectés sous tension nominale.

Le temps de montée en puissance d'une pile à combustible au moyen d'un procédé selon l'invention est particulièrement rapide.

Dans une variante de l'invention, le circuit thermique 12 ne comporte pas d'échangeur 33 et aucune source calorifique auxiliaire 34 n'est en relation d'échange thermique avec le fluide caloporteur. La montée en puissance disponible de la pile à combustible 1 s'effectue de la manière suivante.

Le premier élément de pile 3a est connecté bien que sa température ne soit pas optimale. L'énergie calorifique qu'il dégage alors est récupérée pour le chauffer jusqu'à ce que sa température appartienne à la plage de fonctionnement optimal Pₐ.

Le procédé de montée en puissance disponible de la pile à combustible 1 se poursuit ensuite comme précédemment décrit.

L'énergie calorifique dégagée par l'élément de pile 3a est utilisée pour chauffer l'élément de pile 3b jusqu'à ce que la température de ce dernier appartienne à la plage P_{b}, puis l'élément de pile 3b est connecté au circuit d'alimentation électrique 7. L'énergie calorifique dégagée par les éléments de pile 3a et 3b est ensuite utilisée pour chauffer l'élément de pile 3c jusqu'à ce que la température de ce dernier appartienne à la plage P_{c}, puis l'élément de pile 3c est connecté au circuit d'alimentation électrique 7.

Avantageusement, le dispositif selon cette variante met en oeuvre un circuit thermique 12 d'architecture simple, n'incorporant pas d'échangeur 33.

Pendant sa montée en température, l'élément de pile 3a a des performances énergétiques médiocres. Cependant les autres éléments de pile 3b et 3c sont ensuite chauffés au moyen des pertes calorifiques d'éléments de pile fonctionnant avec des performances énergétiques non dégradées par une température trop faible. Globalement, les performances énergétiques de la pile à combustible 1 pendant sa montée en puissance sont donc améliorées, sans qu'il soit nécessaire de recourir à une source calorifique auxiliaire 34.

Les pertes calorifiques des cellules d'un élément de pile augmentent également lorsqu'elles sont mises en sous tension.

Avantageusement dans cette variante de l'invention, pour accélérer la montée en température du premier élément de pile 3a, on fait fonctionner les cellules qui le composent à une tension inférieure à leur tension nominale jusqu'à ce que la température de cet élément 3a appartienne à la plage de fonctionnement optimal Pₐ.

Avantageusement encore, un ou plusieurs éléments de pile connectés, et notamment le premier élément de pile 3a, peuvent être maintenus en sous tension après avoir atteint une température de fonctionnement optimal, de manière à accélérer le chauffage des éléments de pile restant à connecter et/ou à augmenter la puissance électrique disponible.

Bien entendu, la présente invention n'est pas limitée au mode de réalisation décrit et représenté, fourni à titre d'exemple illustratif et non limitatif.

Le dispositif et le procédé selon l'invention sont généralisables à un pile à combustible 1 comportant un nombre d'éléments de pile quelconque, et à d'autres piles à combustible que les pile à combustible du type PEM.

Les seuils de température à partir desquels les éléments de pile sont connectés électriquement au circuit d'alimentation électrique 7 peuvent être différents de ceux décrits. Les plages Pₐ, P_{b} et P_{c} pourraient par exemple désigner des plages de températures de fonctionnement estimé satisfaisant, et non optimal, des éléments de pile 3a, 3b et 3c, respectivement.

Dans une variante de l'invention, les éléments de pile pourraient être branchés en série, le circuit d'alimentation électrique comportant des branches de dérivation de manière à pouvoir détourner le courant électrique d'un ou plusieurs de ces éléments. Un convertisseur de tension serait alors mis en oeuvre de manière à convertir la tension aux bornes des éléments connectés en une tension adaptée à la commande du moteur de propulsion du véhicule.

En outre, la forme du circuit de chauffage 12 peut être différente de celle décrite. Par exemple, les vannes 29a et 31a peuvent être remplacées de manière équivalente par une vanne unique à trois voies insérée à la jonction 27a.

De manière équivalente enfin, l'ajustement de la température et la connexion électrique des éléments de pile déconnectés pourraient s'effectuer, non plus en procédant élément de pile par élément de pile, mais en procédant par groupe de un ou plusieurs éléments de pile déconnectés.

## Revendications

1. Procédé de gestion de la montée en puissance disponible d'une pile à combustible (1) insérée dans un circuit d'alimentation en énergie électrique (7) d'au moins un consommateur d'un véhicule automobile (V), notamment d'un moteur électrique de propulsion dédit véhicule (V), ladite pile à combustible (1) comportant au moins deux éléments de pile (3a,3b,3c) branchés en parallèle et aptes à être connectés sélectivement audit circuit d'alimentation électrique (7),
**caractérisé en ce que** on procède selon les étapes suivantes :
a) on connecte électriquement audit circuit d'alimentation électrique (7) un premier élément de pile (3a), puis on amène dans une plage de températures de fonctionnement optimal (Pa) la température dudit premier élément de pile (3a)
b) pour tout autre élément de pile (3b,3c) encore déconnecté électriquement dudit circuit (7), on ajuste successivement sa température dans une plage de températures de fonctionnement optimal (Pb,Pc) dudit élément de pile (3b,3c) au moyen d'énergie calorifique dégagée par le dit premier élément de pile (3a), et puis on effectue la connexion électrique audit circuit (7) dudit élément de pile encore déconnecté (3b,3c).

2. Procédé selon l'une quelconque des revendications 1 **caractérisé en ce que**, quand l'énergie électrique délivrée par lesdits éléments de pile connectés (3a,3b,3c) audit circuit d'alimentation électrique (7) est inférieure à la demande d'énergie électrique dudit consommateur, on connecte des moyens de stockage d'énergie électrique (9) audit circuit d'alimentation électrique (7).

3. Procédé selon l'une quelconque des revendications précédentes, **caractérisé en ce que**, quand l'énergie électrique délivrée par lesdits éléments de pile (3a,3b,3c) connectés audit circuit d'alimentation électrique (7) est inférieure à la demande d'énergie électrique dudit consommateur, on met en sous tension des cellules d'au moins un desdits éléments de pile (3a,3b,3c) connectés.

4. Procédé selon l'une quelconque des revendications précédentes, **caractérisé en ce qu'**on utilise l'énergie calorifique dégagée par une source calorifique auxiliaire (34) pour ajuster ladite température pendant l'étape a).

5. Procédé selon la revendication 4, **caractérisé en ce que** ladite source calorifique (34) comporte des gaz chauds générés par un brûleur de chauffage d'un reformeur.

6. Procédé selon la revendication 1, **caractérisé en ce qu**'on fait fonctionner les cellules dudit premier élément de pile (3a) en sous tension au moins jusqu'à ce que la température dudit premier élément de pile (3a) appartienne à une plage de fonctionnement optimal (Pₐ).

7. Procédé selon l'une quelconque des revendications précédentes, **caractérisé en ce qu'**on maintient en sous tension au moins un desdits éléments de pile connectés (3a,3b,3c).

8. Dispositif de montée en puissance disponible d'une pile à combustible (1) insérée dans un circuit d'alimentation en énergie électrique (7) d'au moins un consommateur d'un véhicule automobile (V), notamment un moteur électrique de propulsion dédit véhicule (V), ladite pile à combustible (1) comportant une pluralité d'éléments de pile (3a,3b,3c) et ledit dispositif comportant un circuit thermique de chauffage et/ou de refroidissement(12) desdits éléments de pile (3a,3b,3c) et un calculateur de commande (35) dudit circuit d'alimentation électrique (7) et dudit circuit thermique (12),
**caractérisé en ce que**
ledit circuit thermique(12) comporte des moyens de mise en relation d'échange thermique sélective (25a,25b,29a,29b,31 a,31 b) d'une source calorifique auxiliaire (34) avec d'une part un premier élément de pile (3a), et/ou d'un premier élément de pile (3a) avec les autres éléments de pile (3b, 3c), et
ledit circuit d'alimentation électrique (7) comporte des moyens de connexion électrique sélective (10a,10b,10c) desdits éléments de pile (3a,3b,3c) audit circuit d'alimentation électrique (7).

9. Dispositif selon la revendication 8, **caractérisé en ce que** lesdits éléments de pile (3a,3b,3c) sont insérés dans des branches parallèles (5a,5b,5c) dudit circuit d'alimentation électrique (7).

10. Dispositif selon l'une des revendications 8 et 9, **caractérisé en ce que** lesdits moyens de connexion électrique sélective comportent des interrupteurs insérés (10a,10b,10c) dans chacune desdites branches parallèles (5a,5b,5c).

11. Dispositif selon l'une quelconque des revendications 9 a 12, **caractérisé en ce que** ledit circuit d'alimentation électrique (7) comporte au moins une batterie (9) insérée dans une branche (8) parallèle auxdites branches (5a,5b,5c) et des moyens de connexion sélective (11) de ladite batterie (9) audit circuit d'alimentation électrique (7).

12. Dispositif selon la revendication 8, **caractérisé en ce que** ladite source calorifique auxiliaire (34.) comporte des gaz chauds générés par un brûleur de chauffage d'un reformeur.

13. Dispositif selon l'une quelconque des revendications 8 à 12, **caractérisé en ce que** ledit circuit de chauffage (12) comporte des branches d'entrée (14) et de sortie (15) ayant une première extrémité commune (17), un fluide caloporteur entrant par la deuxième extrémité (19) de ladite branche d'entrée (14) et sortant par la deuxième extrémité (21) de ladite branche de sortie (15), une pluralité d'échangeurs thermiques (23a,23b,23c) associés chacun à au moins un desdits éléments de pile (3a,3b,3c) étant insérés en série dans ladite branche d'entrée (14), au moins un desdits échangeurs (23a;23b) comportant des moyens (25a;25b) de court-circuiter lesdits échangeurs insérés en son aval de manière que le fluide caloporteur sortant dudit échangeur (23a;23b) retourne, au moins en partie, directement dans ladite branche de sortie (15).

14. Dispositif selon la revendication 13, **caractérisé en ce que** lesdits moyens (25a;25b) de court-circuiter lesdits échangeurs (23b,23c; 23c) insérés en aval d'un échangeur (23a;23b) comportent une branche de court-circuit (25a;25b) connectée d'une part à ladite branche d'entrée (14) immédiatement en aval dudit échangeur (23a;23b) et d'autre part à ladite branche de sortie (15), deux vannes (29a,31 a ; 29b,31b) étant insérées respectivement dans ladite branche de court-circuit (25a;25b) et dans ladite branche d'entrée (14), immédiatement en aval du point de connexion de ladite branche de court-circuit (25a;25b).

15. Pile à combustible (1) insérée dans un circuit d'alimentation en énergie électrique (7) d'au moins un consommateur d'un véhicule automobile (V), notamment un moteur électrique de propulsion dudit véhicule M, ladite pile à combustible (1) comportant une pluralité d'éléments de pile (3a,3b,3c) et étant équipée d'un dispositif destiné à améliorer son rendement énergétique pendant sa montée en puissance disponible, ledit dispositif comportant un circuit de chauffage (12) desdits éléments de pile (3a,3b,3c) et un calculateur de commande (35) desdits circuits d'alimentation électrique (7) et de chauffage (12),
**caractérisé en ce que** ledit dispositif est conforme à l'une quelconque des revendications 8 à 14.

## Claims

1. Method for managing the ramp up of a fuel cell (1) inserted into an electric power supply circuit (7) of at least one consumer of a motor vehicle (V), particularly an electric propulsion motor of the said vehicle (V), the said fuel cell (1) comprising at least two cell elements (3a, 3b, 3c) connected in parallel and suitable for connection selectively to the said electric power supply circuit (7),
**characterized in that** the method is implemented in the following steps:
a) a first cell element (3a) is electrically connected to the said electric power supply circuit (7), and the temperature of the said first cell element (3a) is brought into an optimal service temperature range (Pa);
b) for any other cell element (3b, 3c) still electrically disconnected from the said circuit (7), its temperature is successively adjusted in an optimal service temperature range (Pb, Pc) of the said cell element (3b, 3c) using the heat energy liberated by the said first cell element (3a), and the said still disconnected cell element (3b, 3c) is then electrically connected to the said circuit (7).

2. Method according to Claim 1, **characterized in that** when the electric power delivered by the said cell elements (3a, 3b, 3c) connected to the said electric power supply circuit (7) is lower than the electric power demand of the said consumer, electrical energy storage means (9) are connected to the said electric power supply circuit (7).

3. Method according to either of the preceding claims, **characterized in that** when the electric power delivered by the said cell elements (3a, 3b, 3c) connected to the said electric power supply circuit (7) is lower than the electric power demand of the said consumer, cells of at least one of the said connected cell elements (3a, 3b, 3c) are energized.

4. Method according to any one of the preceding claims, **characterized in that** the heat energy liberated by an auxiliary heat source (34) is used to adjust the said temperature during the step a).

5. Method according to Claim 4, **characterized in that** the said heat source (34) comprises hot gases generated by a burner for heating a reformer.

6. Method according to Claim 1, **characterized in that** the cells of the said first cell element (3a) are operated in undervoltage at least until the temperature of the said first cell element (3a) is within an optimal service temperature range (Pa).

7. Method according to any one of the preceding claims, **characterized in that** at least one of the said connected cell elements (3a, 3b, 3c) is maintained in undervoltage.

8. Device for managing the ramp up of a fuel cell (1) inserted into an electric power supply circuit (7) of at least one consumer of a motor vehicle (V), particularly an electric propulsion motor of the said vehicle (V), the said fuel cell (1) comprising a plurality of cell elements (3a, 3b, 3c) and the said device comprising a heat transfer circuit (12) for heating and/or cooling the said cell elements (3a, 3b, 3c) and a computer (35) for controlling the said electric power supply circuit (7) and the said heat transfer circuit (12),
**characterized in that**
the said heat transfer circuit (12) comprises means for establishing selective heat exchange conditions (25a, 25b, 29a, 29b, 31a, 31b) of an auxiliary heat source (34) with, on the one hand, a first cell element (3a), and/or of a first cell element (3a) with the other cell elements (3b, 3c), and
the said electric power supply circuit (7) comprises means (10a, 10b, 10c) for selective electrical connection of the said cell elements (3a, 3b, 3c) to the said electric power supply circuit (7).

9. Device according to Claim 8, **characterized in that** the said cell elements (3a, 3b, 3c) are inserted into parallel branches (5a, 5b, 5c) of the said electric power supply circuit (7).

10. Device according to either of Claims 8 and 9, **characterized in that** the said selective electrical connecting means comprise switches (10a, 10b, 10c) inserted into each of the said parallel branches (5a, 5b, 5c).

11. Device according to any one of Claims 9 to 10, **characterized in that** the said electric power supply circuit (7) comprises at least one battery (9) inserted into a branch (8) parallel to the said branches (5a, 5b, 5c) and means (11) for selectively connecting the said battery (9) to the said electric power supply circuit (7).

12. Device according to Claim 8, **characterized in that** the said auxiliary heat source (34) comprises hot gases generated by a burner for heating a reformer.

13. Device according to any one of Claims 8 to 12, **characterized in that** the said heating circuit (12) comprises inlet (14) and outlet (15) branches having a first common end (17), a heat transfer fluid entering via the second end (19) of the said inlet branch (14) and exiting via the second end (21) of the said outlet branch (15), a plurality of heat exchangers (23a, 23b, 23c) each associated with at least one of the said cell elements (3a, 3b, 3c) being inserted in series into the said inlet branch (14), at least one of the said heat exchangers (23a; 23b) comprising means (25a; 25b) for short-circuiting the said heat exchangers inserted downstream thereof so that the heat transfer fluid exiting from the said heat exchanger (23a; 23b) returns, at least partly, directly to the said outlet branch (15).

14. Device according to Claim 13, **characterized in that** the said means (25a; 25b) for short-circuiting the said heat exchangers (23a, 23b; 23c) inserted downstream of a heat exchanger (23a; 23b) comprise a short-circuit branch (25a; 25b) connected on the one hand to the said inlet branch (14) immediately downstream of the said heat exchanger (23a; 23b) and, on the other, to the said outlet branch (15), two valves (29a, 31a; 29b, 31b) being inserted respectively into the said short-circuit branch (25a; 25b) and into the said inlet branch (14), immediately downstream of the connecting point of the said short-circuit branch (25a; 25b).

15. Fuel cell (1) inserted into an electric power supply circuit (7) of at least one consumer of a motor vehicle (V), particularly an electric propulsion motor of the said vehicle (V), the said fuel cell (1) comprising a plurality of cell elements (3a, 3b, 3c) and being equipped with a device for improving its energy efficiency during its ramp up, the said device comprising a circuit (12) for heating the said cell elements (3a, 3b, 3c) and a computer (35) for controlling the said electric power supply (7) and heating (12) circuits,
**characterized in that** the said device conforms to any one of Claims 8 to 14.

## Patentansprüche

1. Verfahren zum Verwalten des Hochfahrens der verfügbaren Energie einer Brennstoffzelle (1), die in eine Stromversorgungsschaltung (7) mindestens eines Verbrauchers eines Kraftfahrzeugs (V), insbesondere eines Antriebselektromotors des Fahrzeugs (V) eingefügt ist, wobei die Brennstoffzelle (1) mindestens zwei Brennstoffzellenelemente (3a, 3b, 3c) aufweist, die parallel geschaltet sind und selektiv an die Stromversorgungsschaltung (7) angeschlossen werden können,
**dadurch gekennzeichnet, dass** man die folgenden Schritte ausführt:
a) an die Stromversorgungsschaltung (7) schließt man ein erstes Brennstoffzellenelement (3a) elektrisch an und bringt die Temperatur des ersten Brennstoffzellenelements (3a) in einen optimalen Betriebstemperaturenbereich (Pa),
b) für jedes andere Brennstoffzellenelement (3b, 3c), das von der Schaltung (7) noch elektrisch abgesteckt ist, passt man allmählich seine Temperatur in einem optimalen Betriebstemperaturenbereich (Pb, Pc) des Brennstoffzellenelements (3b, 3c) mit der Wärmeenergie an, die von dem ersten Brennstoffzellenelement (3a) abgegeben wird, und dann führt man das elektrische Anschließen an die Schaltung (7) des noch abgesteckten Brennstoffzellenelements (3b, 3c) durch.

2. Verfahren nach Anspruch 1, **dadurch gekennzeichnet, dass** man, wenn die von den Brennstoffzellenelementen (3a, 3b, 3c), die an die Stromversorgungsschaltung (7) angeschlossen sind, gelieferte Elektroenergie niedriger ist als die Elektroenergienachfrage des Verbrauchers, Elektroenergiespeichermittel (9) an die Stromversorgungsschaltung (7) anschließt.

3. Verfahren nach einem der vorhergehenden Ansprüche, **dadurch gekennzeichnet, dass** man, wenn die von den Brennstoffzellenelementen (3a, 3b, 3c), die an die Stromversorgungsschaltung (7) angeschlossen sind, gelieferte Elektroenergie niedriger ist als die Elektroenergienachfrage des Verbrauchers, Zellen mindestens eines der angeschlossenen Brennstoffzellenelemente (3a, 3b, 3c) auf Unterspannung setzt.

4. Verfahren nach einem der vorhergehenden Ansprüche, **dadurch gekennzeichnet, dass** man die Wärmeenergie, die von einer Hilfswärmequelle (34) abgegeben wird, verwendet, um die Temperatur während des Schritts a) anzupassen.

5. Verfahren nach Anspruch 4, **dadurch gekennzeichnet, dass** die Wärmequelle (34) heiße Gase aufweist, die von einem Heizbrenner eines Reformers erzeugt werden.

6. Verfahren nach Anspruch 1, **dadurch gekennzeichnet, dass** man die Zellen des ersten Brennstoffzellenelements (3a) mindestens solange in Unterspannung funktionieren lässt, bis die Temperatur des ersten Brennstoffzellenelements (3a) in einen optimalen Betriebsbereich (Pa) fällt.

7. Verfahren nach einem der vorhergehenden Ansprüche, **dadurch gekennzeichnet, dass** man mindestens eines der angeschlossenen Brennstoffzellenelemente (3a, 3b, 3c) auf Unterspannung hält.

8. Vorrichtung zum Hochfahren der verfügbaren Energie einer Brennstoffzelle (1), die in eine Stromversorgungsschaltung (7) mindestens eines Verbrauchers eines Kraftfahrzeugs (V), insbesondere eines Antriebselektromotors des Fahrzeugs (V) eingefügt ist, wobei die Brennstoffzelle (1) mehrere Brennstoffzellenelemente (3a, 3b, 3c) aufweist und wobei die Vorrichtung eine Heizwärmeschaltung und/oder Kühlwärmeschaltung (12) der Brennstoffzellenelemente (3a, 3b, 3c) sowie einen Rechner zum Steuern (35) der Stromversorgungsschaltung (7) und die Wärmeschaltung (12) aufweist,
**dadurch gekennzeichnet, dass**
die Wärmeschaltung (12) Mittel (25a, 25b, 29a, 29b, 31a, 31b) zum Herstellen einer selektiven Austauschbeziehung einer Hilfswärmequelle (34) einerseits mit einem ersten Brennstoffzellenelement (3a) und/oder einem ersten Brennstoffzellenelement (3a) mit den anderen Brennstoffzellenelementen (3b, 3c) aufweist und
dass die Stromversorgungsschaltung (7) Mittel zum selektiven elektrischen Anschließen (10a, 10b, 10c) der Brennstoffzellenelemente (3a, 3b, 3c) an die Stromversorgungsschaltung (7) aufweist.

9. Vorrichtung nach Anspruch 8, **dadurch gekennzeichnet, dass** die Brennstoffzellenelemente (3a, 3b, 3c) in parallele Zweige (5a, 5b, 5c) der Stromversorgungsschaltung (7) eingefügt sind.

10. Vorrichtung nach einem der Ansprüche 8 und 9, **dadurch gekennzeichnet, dass** die Mittel zum selektiven elektrischen Anschließen Ein/Ausschalter (10a, 10b, 10c) aufweisen, die in jeden der parallelen Zweige (5a, 5b, 5c) eingefügt sind.

11. Vorrichtung nach einem der Ansprüche 9 bis 10, **dadurch gekennzeichnet, dass** die Stromversorgungsschaltung (7) mindestens eine Batterie (9) aufweist, die in einen Zweig (8), der zu den Zweigen (5a, 5b, 5c) parallel ist, eingefügt ist, und Mittel zum selektiven Anschließen (11) der Batterie (9) an die Stromversorgungsschaltung (7).

12. Vorrichtung nach Anspruch 8, **dadurch gekennzeichnet, dass** die Hilfswärmequelle (34) heiße Gase aufweist, die von einem Heizbrenner eines Reformers erzeugt werden.

13. Vorrichtung nach einem der Ansprüche 8 bis 12, **dadurch gekennzeichnet, dass** die Heizschaltung (12) einen Eingangszweig (14) und einen Ausgangszweig (15) aufweist, die ein erstes gemeinsames Ende (17) haben, wobei ein Kühlmittel durch das zweite Ende (19) des Eingangszweigs (14) eintritt und durch das zweite Ende (21) des Ausgangszweigs (15) austritt, wobei mehrere Wärmeaustauscher (23a, 23b, 23c), die jeweils zu mindestens einem der Brennstoffzellenelemente (3a, 3b, 3c) gehören, in Serie in den Eingangszweig (14) eingefügt sind, wobei mindestens einer der Austauscher (23a; 23b) Mittel (25a; 25b) zum Kurzschließen der Austauscher, die stromabwärts von ihm eingefügt sind, aufweist, so dass das Kühlmittel, das den Austauscher (23a; 23b) verlässt, zumindest teilweise direkt in den Ausgangszweig (15) zurückkehrt.

14. Vorrichtung nach Anspruch 13, **dadurch gekennzeichnet, dass** die Mittel (25a; 25b) zum Kurzschließen der Austauscher (23a, 23b; 23c), die stromabwärts eines Austauschers (23a; 23b) eingefügt sind, einen Kurzschließzweig (25a; 25b) aufweisen, der einerseits an den Eingangszweig (14) unmittelbar stromabwärts des Austauschers (23a; 23b) angeschlossen ist, und andererseits an den Ausgangszweig (15), wobei zwei Ventile (29a, 31a; 29b; 31b) jeweils in den Kurzschließzweig (25a; 25b) und in den Eingangszweig (14) unmittelbar stromabwärts der Anschlussstelle des Kurzschließzweigs (25a; 25b) eingefügt sind.

15. Brennstoffzelle (1), die in eine Stromversorgungsschaltung (7) mindestens eines Verbrauchers eines Kraftfahrzeugs (V), insbesondere eines Antriebselektromotors des Fahrzeugs (V) eingefügt ist, wobei die Brennstoffzelle (1) mehrere Brennstoffzellenelemente (3a, 3b, 3c) aufweist und mit einer Vorrichtung ausgestattet ist, die dazu bestimmt ist, ihren Energieertrag während ihres Hochfahrens der verfügbaren Energie zu verbessern, wobei die Vorrichtung eine Heizschaltung (12) der Brennstoffzellenelemente (3a, 3b, 3c) sowie einen Rechner (35) zum Steuern der Stromversorgungsschaltung (7) und Heizschaltung (12) aufweist,
**dadurch gekennzeichnet, dass** die Vorrichtung einem der Ansprüche 8 bis 14 entspricht.
